# FASCICULE DE BREVET EUROPEEN

(11) **EP 0 788 950 B1**
(45) Date de publication et mention de la délivrance du brevet: **12.07.2000**
(21) Numéro de dépôt: 97100672.1
(22) Date de dépôt: 17.01.1997
(51) Int. Cl.: B60S 1/34

(54) **Dispositif d'essuie-glace, notamment pour un véhicule automobile, muni de moyens d'indexation de l'essuie-glace par rapport à un arbre d'entraînement**
Kraftfahrzeug-Scheibenwischervorrichtung mit Scheibenwischer-Indexierungsmittelnunter Berücksichtigung der Antriebswelle
Windscreen wiper in particular for vehicle equipped with indexation means for the wiper with respect to a drive shaft

(30) Priorité: 31.01.1996 FR 9601153
(43) Date de publication de la demande: 13.08.1997
(73) Titulaire: VALEO SYSTEMES D'ESSUYAGE, 78321 La Verrière (FR)
(72) Inventeur: Schitter, Jack, 86100 Antran (FR); Danjou, Jean-Paul, 86100 Chatellerault (FR)
(74) Mandataire: Kohn, Philippe

(56) Documents cités:
- EP-A- 0 491 603
- EP-A- 0 673 813

## Description

L'invention concerne un dispositif d'essuie-glace, notamment pour un véhicule automobile, muni de moyens d'indexation de l'essuie-glace par rapport à un arbre d'entraînement.

L'invention concerne plus particulièrement un dispositif d'essuie-glace pour un véhicule automobile, du type dans lequel un arbre est monté tournant autour de son axe dans un palier fixé sur un élément de structure du véhicule, du type dans lequel l'arbre comporte une extrémité supérieure qui dépasse hors du palier et sur laquelle une tête d'entraînement d'un essuie-glace est fixée par des moyens d'accouplement, et du type dans lequel une manivelle, reliée à un moteur d'entraînement par une tringlerie, entraîne en rotation l'arbre et la tête d'entraînement et l'essuie-glace.

Pour assurer l'accouplement en rotation de la tête d'entraînement par rapport à l'arbre, il est généralement prévu des surfaces coniques correspondantes sur chacun de ces deux éléments qui permettent, lorsqu'elles sont serrées axialement l'une contre l'autre, à l'arbre d'entraîner l'essuie-glace en balayage alterné.

Afin d'augmenter le couple transmissible par ce type de liaison, les surfaces coniques sont généralement cannelées.

Toutefois, au montage de l'essuie-glace sur l'arbre d'entraînement, il est nécessaire d'assurer un positionnement relatif précis des deux éléments, tant pour des raisons d'esthétique que pour éviter que l'essuie-glace soit entraîné en-dehors de la vitre à essuyer lors de son mouvement de balayage alterné.

A cet effet, il a déjà été proposé d'utiliser par exemple des gabarits qui permettent de situer l'essuie-glace par rapport à la carrosserie du véhicule au cours du montage.

Il a également été proposé d'indexer la position de l'arbre par rapport au palier dans lequel l'arbre est monté tournant, le palier étant lui-même fixé sur la structure du véhicule.

De tels moyens d'indexation doivent être provisoires étant donné que l'essuie-glace est amené à se déplacer par rapport à ces éléments fixes de la structure du véhicule. Aussi, il a par exemple été proposé d'utiliser un pion sécable, porté par exemple par le palier ou par un élément qui y est fixé, et qui est reçu dans une encoche d'indexation formée sur la tête d'entraînement.

A la première utilisation de l'essuie-glace, le pion est cassé et libère le mouvement relatif de la tête d'entraînement par rapport au palier.

Un tel dispositif présente l'inconvénient que le pion sécable risque de ne pas se casser à l'endroit exactement voulu et que de plus on ne maîtrise pas avec certitude ce qu'il advient du pion une fois cassé.

Ainsi, le pion peut dans certains cas rester coincé entre le palier et la tête d'entraînement et constituer une entrave au fonctionnement correct du dispositif d'essuyage.

Par ailleurs, un tel dispositif ne permet d'indexer l'essuie-glace que par rapport à un élément fixe de la structure ou de la carrosserie du véhicule automobile et non par rapport à l'arbre d'entraînement.

Ainsi, si l'arbre d'entraînement n'est pas positionné, lors du montage de l'essuie-glace, dans sa position correspondant à la position de repos de l'essuie-glace, il va en résulter un décalage angulaire des positions extrêmes de l'essuie-glace qui pourra ainsi être entraîné au-delà de la limite de la surface vitrée à essuyer.

Dans le but d'apporter une solution à ce problème, il a déjà été proposé dans le document EP-A-0.491.603 un dispositif d'essuie-glace du type dans lequel il est prévu des moyens d'indexation de la position angulaire de la tête d'entraînement par rapport à l'arbre, dans lesquels la tête d'entraînement comporte un élément de forme complémentaire d'un élément correspondant porté par un organe porté par l'arbre.

Selon l'invention, ledit organe est lié en rotation avec l'arbre.

Selon des modes de réalisation de l'invention :
- les moyens d'accouplement et d'indexation de la tête d'entraînement et de l'arbre comportent chacun des formes complémentaires qui entrent en prise par emboîtement axial lorsque la tête est montée axialement du haut vers le bas sur l'extrémité supérieure de l'arbre, et les moyens d'indexation entrent en prise avant les moyens d'accouplement ;
- l'organe lié en rotation avec l'arbre est agencé sur l'extrémité supérieure de l'arbre, entre une extrémité supérieure du palier et la tête d'entraînement ;
- les éléments de formes complémentaires sont agencés respectivement sur une face inférieure de la tête d'entraînement et sur une face supérieure de l'organe ;
- l'organe est une bague fixée sur l'arbre ;
- la bague comporte une jupe cylindrique latérale qui s'étend vers le bas autour de l'extrémité supérieure du palier ;
- l'organe est constitué par la manivelle qui est agencée sur l'extrémité supérieure de l'arbre ;
- la tête d'entraînement comporte un pion qui s'étend axialement vers le bas et qui est reçu dans un trou complémentaire formé dans l'organe lié à l'arbre ;
- la tête d'entraînement comporte un trou dans lequel est reçu un pion complémentaire d'indexation porté par l'organe lié à l'arbre ;
- l'organe lié à l'arbre comporte, sur une face supérieure, un plot d'indexation qui est reçu dans une empreinte de forme complémentaire formée dans une face inférieure de la tête d'entraînement ;
- les moyens d'accouplement de la tête d'entraînement et de l'arbre comportent des surfaces coniques complémentaires, et l'organe lié en rotation à l'arbre est agencé en dessous de la surface conique portée par l'arbre.

D'autres caractéristiques et avantages de l'invention apparaîtront à la lecture de la description détaillée qui suit pour la compréhension de laquelle on se reportera aux dessins annexés dans lesquels :

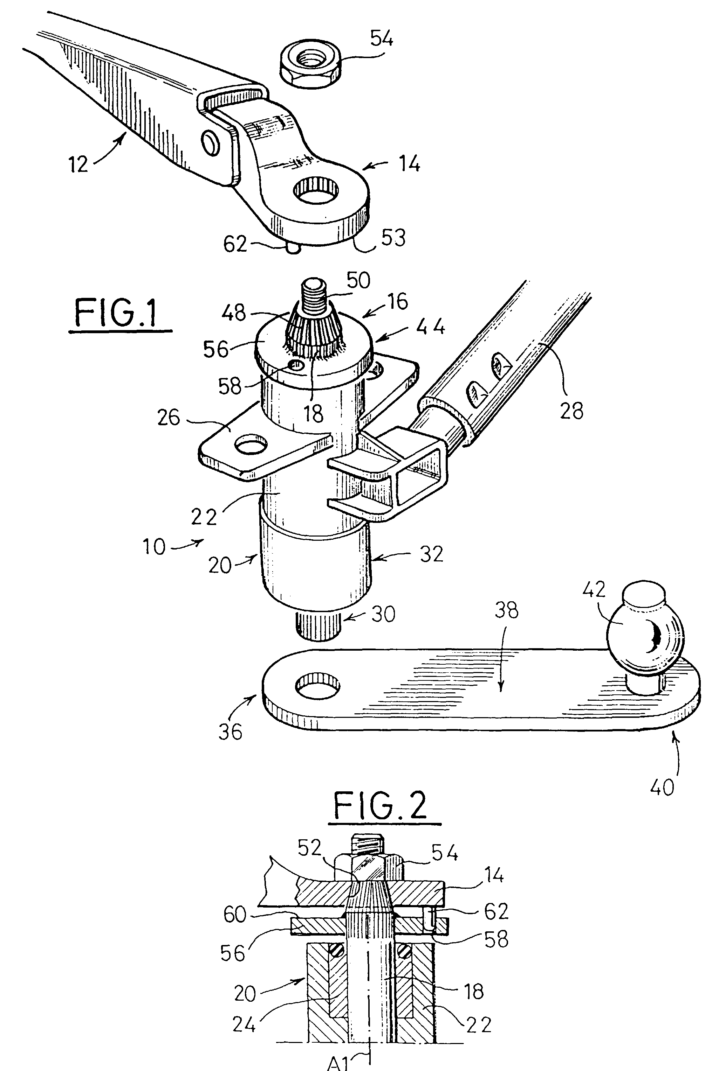

- la figure 1 est une vue en perspective éclatée d'un dispositif d'essuie-glace conforme aux enseignements de l'invention ;
- la figure 2 est une vue partielle en coupe axiale de l'assemblage d'un essuie-glace sur un arbre d'entraînement conformément aux enseignements de l'invention ;
- la figure 3 est une vue partielle en perspective illustrant une variante de réalisation des moyens d'indexation de l'essuie-glace par rapport à l'arbre d'entraînement ;
- la figure 4 est une vue partielle en coupe axiale du dispositif de la figure 3 ;
- les figures 5 et 6 sont des vues similaires à celles des figures 1 et 2 illustrant un autre mode de réalisation de l'invention.

On a représenté sur les figures un dispositif 10 d'essuie-glace destiné à permettre l'essuyage d'une vitre d'un véhicule automobile, par exemple le pare-brise du véhicule.

Le dispositif 10 comporte un essuie-glace 12 dont une tête d'entraînement 14 d'un bras d'essuie-glace (non représenté) est montée à l'extrémité supérieure 16 d'un arbre d'entraînement 18 qui est monté à rotation, autour de son axe A1, à l'intérieur d'un palier 20. L'axe A1 de l'arbre 18 est sensiblement perpendiculaire à l'essuie-glace 12 et donc perpendiculaire à la surface vitrée à essuyer.

Le palier 20 comporte essentiellement un fût tubulaire 22 dans lequel l'arbre 18 est monté par l'intermédiaire de coussinets 24, et qui est fixé sur un élément de structure ou de carrosserie (non représenté) du véhicule grâce à deux flasques de fixation 26 qui s'étendent, perpendiculairement à l'axe A1, à l'extérieur du fût 22.

De manière connue, un tel palier peut être relié par une barre de rigidification 28 à un second palier ou à un autre point d'attache sur la structure fixe du véhicule.

L'extrémité inférieure 30 de l'arbre 18 dépasse en dessous de l'extrémité inférieure 32 du fût 22 et elle est striée de manière à pouvoir permettre le montage en force d'une extrémité 36 d'une manivelle 38 qui s'étend perpendiculairement à l'axe A1 et dont la seconde extrémité opposée 40 comporte une rotule de liaison 42 qui permet de relier la manivelle 38 à un groupe motoréducteur (non représenté) par l'intermédiaire d'une tringlerie (non représentée) afin d'entraîner l'arbre 18 en rotation alternée autour de son axe A1.

L'extrémité supérieure 16 de l'arbre 18 dépasse au-dessus d'une extrémité supérieure 44 du fût 22 et comporte une surface de portée conique 48 prolongée axialement vers le haut par une tige filetée d'extrémité 50. La tête d'entraînement 14 comporte un perçage conique 52 complémentaire de la surface de portée conique 48 de sorte que la tête d'entraînement 14 peut être introduite axialement du haut vers le bas autour de la tige filetée 50 jusqu'à venir en appui contre la surface de portée conique 48.

Le perçage conique complémentaire 52 de la tête d'entraînement 14 est évasé vers le bas de manière à déboucher par son extrémité de plus grand diamètre dans la face inférieure 53 de la tête d'entraînement 14.

Un écrou 54 est vissé sur la tige filetée d'extrémité 50 et prend appui sur une surface supérieure de la tête d'entraînement 14 pour serrer axialement la tête d'entraînement 14 contre la surface de portée conique 48 de l'arbre 18.

La surface de portée conique 48 peut être lisse de manière à former un accouplement par adhérence des surfaces coniques de forme complémentaire mais, dans l'exemple de réalisation qui est représenté sur les figures, elle est munie de cannelures parallèles à sa génératrice. Le perçage conique complémentaire 52 de la tête d'entraînement 14 est aussi cannelé de sorte que, lorsque la tête d'entraînement 14 est serrée axialement contre la surface de portée conique 48, les surfaces complémentaires assurent un centrage, un positionnement axial et un accouplement en rotation de très bonne qualité de la tête d'entraînement 14 par rapport à l'arbre 18.

Conformément aux enseignements de l'invention, il est prévu des moyens d'indexation qui permettent de déterminer de manière précise la position angulaire de l'essuie-glace 12 autour de l'axe A1 par rapport à l'arbre d'entraînement 18.

A cet effet, l'arbre d'entraînement 18 comporte une bague annulaire 56, qui s'étend dans un plan perpendiculaire à l'axe A1 de l'arbre 18 et qui est monté sur l'extrémité supérieure 16 de l'arbre 18, au-dessus de l'extrémité supérieure 44 du fût 22 du palier 20, mais en-dessous de la surface de portée conique 48 de l'arbre 18.

La bague annulaire 56 est fixée sur l'arbre par tout moyen propre à assurer leur immobilisation fiable, par exemple par soudage ou par emboîtement à force. Dans ce dernier cas, l'arbre 18 peut par exemple être muni de striures semblables à celles dont est munie son extrémité inférieure 30 et il peut également comporter une surface radiale d'épaulement pour déterminer la position axiale de la bague annulaire 56.

La bague annulaire 56 est munie d'un perçage 58 qui, dans l'exemple représenté, débouche à ses deux extrémités mais qui peut être un perçage borgne débouchant dans la face supérieure 60 de la bague annulaire 56.

Le perçage 58 est d'axe sensiblement parallèle à l'axe A1 de l'arbre 18 mais décalé par rapport à celui-ci.

Le perçage 58 est destiné à recevoir un pion 62 de forme complémentaire et qui s'étend axialement vers le bas depuis la surface inférieure 53 de la tête d'entraînement 14 qui est en regard de la face supérieure 58 de la bague 56 lorsque l'essuie-glace 12 est monté sur l'arbre 18.

Lorsque le pion 62 est reçu à l'intérieur du perçage 60, on obtient une indexation angulaire précise de l'essuie-glace 12 par rapport à l'arbre 18 autour de l'axe A1.

Le perçage 58 peut être formé dans la bague annulaire 56 soit avant son montage sur l'arbre 18, auquel cas il faut positionner angulairement de manière précise la bague 56 lors de son montage sur l'arbre 18, soit le perçage 58 est percé après le montage de la bague 56 sur l'arbre 18, voire même après le montage de la manivelle 38 sur l'extrémité inférieure 30 de l'arbre 18, auxquels cas il est aisé d'obtenir une position angulaire précise du perçage 58 autour de l'axe A1 par rapport à l'arbre 18 et par rapport à la manivelle 38.

Le pion 62 peut être au choix réalisé venu de matière avec la tête d'entraînement 14 ou réalisé sous la forme d'une pièce indépendante, par exemple emboîtée à force dans un logement prévu à cet effet dans la surface inférieure 53 de la tête d'entraînement 14.

Pour effectuer le montage de l'essuie-glace 12 sur l'extrémité supérieure de l'arbre 18, la tête d'entraînement 14 est introduite axialement du haut vers le bas autour de l'extrémité supérieure 16 de l'arbre 18 jusqu'à ce que le pion 62 arrive au contact de la face supérieure 60 de la bague annulaire 56. Il est souhaitable que la dimension axiale du pion 62 soit telle que lorsque il est en contact avec la face supérieure 60 de la bague 56, il empêche la coopération des surfaces coniques correspondantes 48, 52 de l'arbre 18 et de la tête d'entraînement 14, de manière à autoriser un libre pivotement de l'essuie-glace autour de l'axe A1.

Il est ainsi possible d'amener le pion 62 en concordance angulaire avec l'orifice 58 de la bague 56 et de poursuivre alors l'emboîtement axial de la tête d'entraînement 14 sur l'arbre 18.

Le vissage de l'écrou 54 sur la tige filetée d'extrémité 50 permet alors d'assembler définitivement l'essuie-glace sur l'arbre 18.

Pour éviter tout frottement entre la bague annulaire 56 et l'extrémité supérieure 44 du palier 20 qui sont mobiles l'un par rapport à l'autre, il est prévu un jeu axial entre les deux.

Si les surfaces coniques complémentaires 48, 52 d'accouplement de l'essuie-glace 12 et de l'arbre 18 sont lisses, il est intéressant de prévoir un jeu aussi réduit que possible entre le pion 62 et l'orifice 58 de manière que le pion 62 puisse participer à l'accouplement en rotation et transmettre ainsi une partie du couple nécessaire au mouvement de balayage alterné.

Au contraire, dans le cas où les surfaces coniques 48, 52 sont cannelées, il est préférable de prévoir un jeu suffisamment important entre le pion 62 et l'orifice 58 pour permettre d'amener en correspondance les cannelures en relief de l'une des surfaces avec les cannelures en creux de la surface conique opposée.

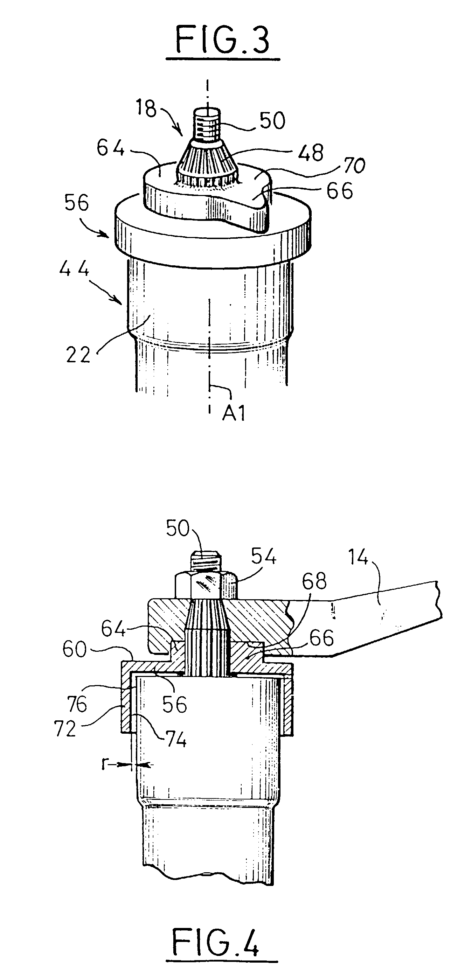

On a représenté sur la figure 3 une variante de réalisation des moyens d'indexation.

Dans ce mode de réalisation, la bague annulaire 56 comporte, dans sa face supérieure 60, un plot annulaire 64, dont le diamètre externe est inférieur au diamètre externe de la bague annulaire 56, mais qui est muni d'une excroissance radiale 66.

La face inférieure 53 de la tête d'entraînement 14 est munie d'un logement 68 de forme correspondante dans lequel est reçu le plot 64 lorsque l'essuie-glace est monté sur l'arbre 18.

La profondeur axiale et l'épaisseur axiale, respectivement du logement 68 et du plot 64, sont déterminées de manière à laisser subsister, entre la face supérieure 70 du plot et le fond transversal du logement 68, un jeu radial de manière à ne pas perturber la coopération des deux surfaces coniques complémentaires 48, 52 de l'arbre 18 et de la tête d'entraînement 14 pour l'accouplement en rotation.

Selon un autre aspect de l'invention, la bague annulaire 56 est ici munie d'une jupe cylindrique 72 qui s'étend axialement vers le bas depuis la périphérie externe de la bague 16, autour de l'extrémité supérieure 44 du palier 20.

En prévoyant un jeu radial « r » entre la surface cylindrique interne 74 de la jupe 72 et la surface cylindrique externe 76 de l'extrémité supérieure 44 du palier 20, la jupe 72 forme une chicane d'étanchéité qui protège le montage tournant de l'arbre 18 dans le fût 22 du palier 20 contre les poussières et les projections d'eau.

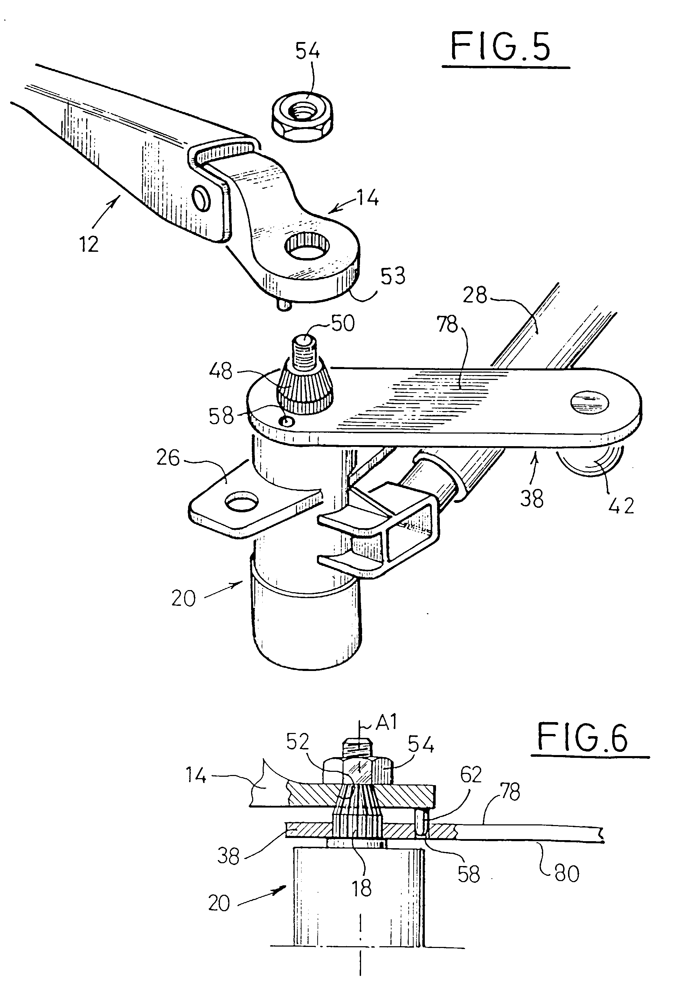

On a représenté sur les figures 5 et 6 un autre mode de réalisation de l'invention dans lequel le dispositif d'essuyage 10 comporte une manivelle 38 qui est montée sur l'extrémité supérieure 16 de l'arbre 18 et non à son extrémité inférieure.

La biellette 38 qui, comme dans le premier mode de réalisation décrit ci-dessus, est constituée d'une plaque allongée, est alors montée sur l'arbre 18 en lieu et place de la bague annulaire 56, en dessous de la surface de portée conique 48 mais au-dessus de l'extrémité supérieure 44 du palier 20.

Dans le mode de réalisation qui est représenté sur les figures 5 et 6, on a prévu sur l'extrémité 36 de la biellette 38 un perçage 58 destiné à recevoir un pion 62 agencé sur la face inférieure 53 de la tête d'entraînement 14 pour former des moyens d'indexation de la position de l'essuie-glace 12 par rapport à l'arbre 18.

Dans le cas où la manivelle 38 est agencée à l'extrémité supérieure 16 de l'arbre 18, on peut également utiliser des moyens d'indexation conformes à ceux représentés aux figures 3 et 4.

Le plot muni de son excroissance radiale est alors formé sur la face supérieure 78 de la manivelle 38 et la face inférieure 80 de celle-ci peut être munie d'une jupe cylindrique (non représentée) s'étendant axialement vers le bas autour de l'extrémité supérieure 44 du palier 20.

## Revendications

1. Dispositif d'essuie-glace pour un véhicule automobile, du type dans lequel un arbre d'entraînement (18) est monté tournant autour de son axe (A1) dans un palier (20) fixé sur un élément de structure du véhicule, du type dans lequel l'arbre (18) comporte une extrémité supérieure (16) qui dépasse hors du palier (20) et sur laquelle une tête d'entraînement (14) d'un essuie-glace (12) est fixée par des moyens d'accouplement (48, 52), et du type dans lequel une manivelle (38), reliée à un moteur d'entraînement par une tringlerie, entraîne en rotation l'arbre (18), la tête d'entraînement (14) et l'essuie-glace (12), et du type dans lequel il est prévu des moyens d'indexation (58, 62, 64, 66) de la position angulaire de la tête d'entraînement (14) par rapport à l'arbre (18), dans lesquels la tête d'entraînement (14) comporte un élément (62) de forme complémentaire d'un élément correspondant (58, 66) porté par un organe porté par l'arbre, caractérisé en ce que ledit organe (56, 38) est lié en rotation avec l'arbre (18).

2. Dispositif selon la revendication 1, caractérisé en ce que les moyens d'accouplement et d'indexation de la tête d'entraînement (18) et de l'arbre (14) comportent chacun des formes complémentaires qui entrent en prise par emboîtement axial lorsque la tête (14) est montée axialement du haut vers le bas sur l'extrémité supérieure (16) de l'arbre (18), et en ce que les moyens d'indexation entrent en prise avant les moyens d'accouplement.

3. Dispositif selon l'une quelconque des revendications 1 ou 2, caractérisé en ce que l'organe (56, 38) lié en rotation avec l'arbre (18) est agencé sur l'extrémité supérieure (16) de l'arbre (18), entre une extrémité supérieure (44) du palier (20) et la tête d'entraînement (14).

4. Dispositif selon la revendication 3, caractérisé en ce que les éléments de formes complémentaires sont agencés respectivement sur une face inférieure (53) de la tête d'entraînement (14) et sur une face supérieure (60) de l'organe (56, 38).

5. Dispositif selon l'une quelconque des revendications précédentes, caractérisé en ce que l'organe est une bague (56) fixée sur l'arbre (18).

6. Dispositif selon la revendication 5, caractérisé en ce que la bague (56) comporte une jupe cylindrique latérale (72) qui s'étend vers le bas autour de l'extrémité supérieure (44) du palier (20).

7. Dispositif selon l'une quelconque des revendications 1 à 4, caractérisé en ce que l'organe est constitué par la manivelle (38) qui est agencée sur l'extrémité supérieure (16) de l'arbre (18).

8. Dispositif selon l'une quelconque des revendications précédentes, caractérisé en ce que la tête d'entraînement (14) comporte un pion (62) qui s'étend axialement vers le bas et qui est reçu dans un trou complémentaire (58) formé dans l'organe lié à l'arbre.

9. Dispositif selon l'une quelconque des revendications 1 à 7, caractérisé en ce que la tête d'entraînement (14) comporte un trou (58) dans lequel est reçu un pion complémentaire d'indexation (62) porté par l'organe (56, 38) lié à l'arbre.

10. Dispositif selon l'une quelconque des revendications 1 à 9, caractérisé en ce que l'organe (56, 38) lié à l'arbre (18) comporte, sur une face supérieure (60, 78), un plot d'indexation (64) qui est reçu dans une empreinte (68) de forme complémentaire formée dans une face inférieure (53) de la tête d'entraînement (14).

11. Dispositif selon l'une quelconque des revendications précédentes, caractérisé en ce que les moyens d'accouplement de la tête d'entraînement (14) et de l'arbre (18) comportent des surfaces coniques complémentaires (48, 52), et en ce que l'organe (56, 38) lié en rotation à l'arbre (18) est agencé en dessous de la surface conique (48) portée par l'arbre (18).

## Patentansprüche

1. Scheibenwischervorrichtung für ein Kraftfahrzeug, bei der eine Antriebswelle (18) drehbar um ihre Achse (A1) in einem an einem Strukturelement des Fahrzeugs befestigten Lager (20) gelagert ist, wobei die Welle (18) ein oberes Ende (16) umfaßt, das aus dem Lager (20) heraus übersteht und auf dem ein Antriebskopf (14) eines Scheibenwischers (12) durch Verbindungsmittel (48, 52) befestigt ist, und wobei eine durch ein Gestänge mit einem Antriebsmotor verbundene Kurbel (38) die Welle (18), den Antriebskopf (14) und den Scheibenwischer (12) drehend antreibt und wobei Rastmittel (58, 62, 64, 66) zur Verrastung der Winkelposition des Antriebskopfes (14) im Verhältnis zur Welle (18) vorgesehen sind, bei denen der Antriebskopf (14) ein Element (62) mit einer Form passend zu einem entsprechenden Element (58, 66) umfaßt, das an einem an der Welle angebrachten Organ angebracht ist, **dadurch gekennzeichnet,** daß das besagte Organ (56, 38) drehfest mit der Welle (18) verbunden ist.

2. Vorrichtung nach Anspruch 1, **dadurch gekennzeichnet,** daß die Verbindungs- und Rastmittel des Antriebskopfes (18) und der Welle (14) jeweils zueinander passende Formen umfassen, die durch axiale Einpassung in Eingriff kommen, wenn der Antriebskopf (14) axial von oben nach unten am oberen Ende (16) der Welle (18) angebracht wird, und daß die Rastmittel vor den Verbindungsmitteln in Eingriff kommen.

3. Vorrichtung nach einem der Ansprüche 1 oder 2, **dadurch gekennzeichnet,** daß das Organ (56, 38) zur drehfesten Verbindung mit der Welle (18) am oberen Ende (16) der Welle (18) zwischen einem oberen Ende (44) des Lagers (20) und dem Antriebskopf (14) angeordnet ist.

4. Vorrichtung nach Anspruch 3, **dadurch gekennzeichnet,** daß die formschlüssigen Elemente an einer Unterseite (53) des Antriebskopfes (14) bzw. an einer Oberseite (60) des Organs (56, 38) angeordnet sind.

5. Vorrichtung nach einem der vorangehenden Ansprüche, **dadurch gekennzeichnet,** daß das Organ ein an der Welle (18) befestigter Ring (56) ist.

6. Vorrichtung nach Anspruch 5, **dadurch gekennzeichnet,** daß der Ring (56) eine seitliche zylindrische Einfassung (72) umfaßt, die sich nach unten um das obere Ende (44) des Lagers (20) herum erstreckt.

7. Vorrichtung nach einem der Ansprüche 1 bis 4, **dadurch gekennzeichnet,** daß das Organ aus der Kurbel (38) besteht, die am oberen Ende (16) der Welle (18) angeordnet ist.

8. Vorrichtung nach einem der vorangehenden Ansprüche, **dadurch gekennzeichnet,** daß der Antriebskopf (14) einen Stift (62) umfaßt, der sich axial nach unten erstreckt und der in ein formschlüssiges Loch (58) eingesetzt ist, das in dem mit der Welle verbundenen Organ ausgebildet ist.

9. Vorrichtung nach einem der Ansprüche 1 bis 7, **dadurch gekennzeichnet,** daß der Antriebskopf (14) ein Loch (58) umfaßt, in das ein formschlüssiger Raststift (62) eingesetzt ist, der an dem mit der Welle verbundenen Organ (56, 38) angebracht ist.

10. Vorrichtung nach einem der Ansprüche 1 bis 9, **dadurch gekennzeichnet,** daß das mit der Welle (18) verbundene Organ (56, 38) auf einer Oberseite (60, 78) einen Rastsockel (64) umfaßt, der in eine formschlüssige Aufnahme (68) eingesetzt ist, die in einer Unterseite (53) des Antriebskopfes (14) ausgebildet ist.

11. Vorrichtung nach einem der vorangehenden Ansprüche, **dadurch gekennzeichnet,** daß die Verbindungsmittel des Antriebskopfes (14) und der Welle (18) formschlüssige konische Flächen (48, 52) umfassen und daß das drehfest mit der Welle (18) verbundene Organ (56, 38) unterhalb der an der Welle (18) angebrachten konischen Fläche (48) angeordnet ist.

## Claims

1. Screen wiping apparatus for a motor vehicle, of the type in which a drive spindle (18) is mounted for rotation about its axis (A1) in a bearing (20) fixed on a structural element of the vehicle, of the type in which the spindle (18) has an upper end (16) which extends out of the bearing (20) and on which a drive head (14) of a screen wiper (12) is fixed by coupling means (48, 52), and of the type in which a crank (38), coupled to a drive motor through a linkage, drives the spindle (18), the drive head (14) and the screen wiper (12) in rotation, and of the type in which means (58, 62, 64, 66) are provided for indexing the angular position of the drive head (14) with respect to the spindle (18), wherein the drive head (14) includes an element (62) the form of which is complementary to a corresponding element (58, 66) carried by a member which is carried by the spindle, characterised in that the said member (56, 38) is coupled in rotation with the spindle (18).

2. Apparatus according to Claim 1, characterised in that the coupling and indexing means for the drive head (18) and spindle (14) each include complementary forms which enter into engagement by axial insertion when the head (14) is fitted axially downwards on the upper end (16) of the spindle (18), and in that the indexing means enter into engagement before the coupling means.

3. Apparatus according to Claim 1 or Claim 2, characterised in that the member (56, 38) which is coupled in rotation with the spindle (18) is arranged on the upper end (16) of the spindle (18), between an upper end (44) of the bearing (20) and the drive head (14).

4. Apparatus according to Claim 2, characterised in that the elements with complementary forms are arranged on a lower face (53) of the drive head (14) and on an upper face (40) of the member (56, 38), respectively.

5. Apparatus according to any one of the preceding Claims, characterised in that the member (56) is a ring fixed on the spindle (18).

6. Apparatus according to Claim 5, characterised in that the ring (56) includes a cylindrical lateral skirt (72) which extends downwards around the upper end (44) of the bearing (20).

7. Apparatus according to any one of Claims 1 to 4, characterised in that the member consists of the crank (38) which is arranged on the upper end (16) of the spindle (18).

8. Apparatus according to any one of the preceding Claims, characterised in that the drive head (14) includes a pin (62) which extends axially downwards and which is received in a complementary hole (58) formed in the member that is coupled to the spindle.

9. Apparatus according to any one of Claims 1 to 7, characterised in that the drive head (14) has a hole (58) in which there is received a complementary indexing pin (62) carried by the member (56, 38) that is coupled to the spindle.

10. Apparatus according to any one of Claims 1 to 9, characterised in that the member (56, 38) which is coupled to the shaft (18) includes, on an upper face (60, 78), an indexing pad (64) which is received in a complementary socket (68) formed in a lower face (53) of the drive head (14).

11. Apparatus according to any one of the preceding Claims, characterised in that the coupling means of the drive head (14) and spindle (18) have complementary conical surfaces (48, 52), and in that the member (56, 38) which is coupled in rotation to the spindle (18) is arranged above the conical surface (48) carried by the spindle (18).
